# EUROPÄISCHE PATENTSCHRIFT

(11) **EP 3 552 164 B1**
(45) Veröffentlichungstag und Bekanntmachung des Hinweises auf die Patenterteilung: **14.06.2023**
(21) Anmeldenummer: 17804542.3
(22) Anmeldetag: 25.11.2017
(51) Int. Cl.: H04W 12/08, G06Q 20/32, G06F 16/9535, G06F 16/955, H04L 9/40

(54) **VERFAHREN ZUR ZUORDNUNG EINES ZIELGERÄTS ZU EINEM USER**
METHOD FOR ASSOCIATING A TARGET DEVICE WITH A USER
PROCÉDÉ D'ASSOCIATION D'UN APPAREIL CIBLE À UN UTILISATEUR

(30) Priorität: 06.12.2016 DE 102016014478
(43) Veröffentlichungstag der Anmeldung: 16.10.2019
(73) Patentinhaber: UIB Holdings Pte. Lte., Singapore 039190 (SG)
(72) Erfinder: RÜCKERT, Tobias, 73650 Winterbach (DE)
(74) Vertreter: Heidinger, Andreas
(86) Internationale Anmeldenummer: PCT/EP2017/080436
(87) Internationale Veröffentlichungsnummer: WO 2018/104086

(56) Entgegenhaltungen:
- DE-B3-102011 117 777
- US-B1- 9 246 921
- US-B2- 8 544 724

## Beschreibung

Die Erfindung betrifft ein Verfahren zur Zuordnung eines Zielgeräts zu einem User mit den Merkmalen des Anspruchs 1.

Viele elektronische Geräte für den industriellen, gewerblichen wie auch den privaten Gebrauch verfügen über eine Schnittstelle, über die Informationen, wie beispielsweise Statusinformationen oder Messwerte ausgelesen werden können oder das Gerät angesteuert, beispielsweise aktiviert, deaktiviert oder konfiguriert werden kann. Beispiele dafür sind im privaten Bereich Wetterstationen, die die Temperatur und die Luftqualität messen, Überwachungskameras, Klimaanlagen, Fernsehgeräte, Heizungssteuerungen, Kühlschränke und im industriellen Bereich Bearbeitungsmaschinen oder Zugangssysteme. Derartige elektronische Geräte werden im Folgenden als Zielgeräte bezeichnet. Die Verbindung zu dem entsprechenden Gerät kann zumeist mittels spezieller Programme auf einem Computer, einem Tablet-Computer, einem Smartphone, einem so genannten Wearable Device oder einem anderen elektronischen Gerät, das Programme oder Apps ausführen kann, aufgebaut werden. Diese elektronischen Geräte werden im Folgenden als Endgeräte bezeichnet. Um die genannte Verbindung herstellen zu können, ist beispielsweise eine Kopplung über eine drahtlose Verbindung insbesondere das Internet notwendig. Es gibt auch Hersteller von Zielgeräten, die eine Plattform anbieten, über die mit einem oder mehreren Zielgeräten dieses Herstellers eine Verbindung hergestellt werden kann. Eine derartige Plattform kann als eine spezifische Kommunikationsplattform bezeichnet werden. Um diese Plattform nutzen zu können, ist dann wiederum ein spezielles Programm auf einem Endgerät eines Users notwendig. Die genannten Informationen werden dann in einem speziellen Protokoll übertragen, das von dem verwendeten Programm unterstützt wird. Die dabei verwendeten Protokolle unterscheiden sich sehr stark. Ein User, der mit Zielgeräten verschiedener Hersteller Informationen austauschen möchte, muss daher verschiedene Endgeräte und/oder verschiedene Programme mit verschiedenen Protokollen benutzen.

Es ist auch möglich, dass die Kommunikation zwischen dem User, beziehungsweise einem ihm zugeordneten Endgerät und einem Zielgerät über einen Kommunikationskanal erfolgt, über den der User auch mit anderen Usern kommunizieren kann, also beispielsweise über einen so genannter Kurznachrichtendienst, wie beispielsweise SMS, Twitter ^{®}, WhatsApp ^{®} oder E-Mail oder über Nachrichten in einem sozialen Netzwerk wie Facebook ^{®}. Um dies zu ermöglichen, ist insbesondere eine so genannte universelle Kommunikationsplattform vorhanden, die elektronische Nachrichten des Users so umsetzt und weiterleitet, dass sie von den Zielgeräten ausgewertet werden können. Die universelle Kommunikationsplattform empfängt außerdem Meldungen von den Zielgeräten, wandelt diese um und sendet sie über einen der genannten Kommunikationskanäle an den User. Bei Nutzung einer derartigen Kommunikation ist es nicht erwünscht, dass jeder beliebige User an jedes beliebige Zielgerät eine elektronische Nachricht, beispielsweise in Form eines Befehls senden kann. Es wäre aber sehr umständlich, wenn sich ein User vor oder bei jedem Senden einer elektronischen Nachricht an ein Zielgerät autorisieren, beispielsweise eine Userkennung und ein Kennwort eingeben müsste.

Die US 8 544 724 B2 beschreibt eine Zuordnung eines mobilen Endgeräts zu einem bestehenden Account eines Users.

Es ist damit insbesondere die Aufgabe der Erfindung, ein Verfahren zur Zuordnung eines Zielgeräts zu einem User vorzuschlagen, welches einen einfachen und dennoch sicheren Informationsaustausch zwischen einem User und einem Zielgerät ermöglicht. Erfindungsgemäß wird die Aufgabe durch ein Verfahren mit den Merkmalen des Anspruchs 1 gelöst.

Beim erfindungsgemäßen Verfahren zur Zuordnung eines Zielgeräts zu einem User wird ein Zielgerät mit dem Internet verbunden. Anschließend wird eine dem Zielgerät zugeordneten Internetseite aufgerufen, bei der eine User-Kontaktadresse des Users für wenigstens einen Kommunikationskanal eingegeben wird. Außerdem wird auf der Internetseite eine Zielgerät-Kontaktadresse des Zielgeräts für den genannten Kommunikationskanal bereitgestellt. Der User sendet dann eine elektronische Nachricht über den genannten Kommunikationskanal an die Zielgerät-Kontaktadresse des Zielgeräts, wobei der Absender der Nachricht über die angegebene User-Kontaktadresse identifiziert werden kann und es sich dabei auch um eine Antwort auf eine an den User gesandte elektronische Nachricht handeln kann. Wenn die genannte elektronische Nachricht des Users korrekt empfangen wird, wird das Zielgerät dem User zugeordnet.

Die genannten Schritte müssen nicht zwingend in der angegebenen Reihenfolge durchgeführt werden. Insbesondere kann das Zielgerät auch später, beispielsweise auch erst nachdem alle anderen Schritte durchgeführt wurden, mit dem Internet verbunden werden.

Unter einer Zuordnung des Zielgeräts zu einem User soll in diesem Zusammenhang verstanden werden, dass das Zielgerät mit dem User so verknüpft wird, dass er insbesondere über ein Endgerät mit dem Zielgerät kommunizieren und damit Informationen austauschen kann, ohne sich bei jedem Informationsaustausch erneut autorisieren zu müssen. Der User wird insbesondere über die auf der genannten Internetseite hinterlegten User-Kontaktadresse identifiziert, wobei es insbesondere ausreicht, wenn bei einer elektronischen Nachricht des Users an das Zielgerät, die User-Kontaktadresse als Absender angegeben ist.

Für die Zuordnung des Zielgeräts zum User sind damit wenige und außerdem einfach auszuführende Schritte notwendig. Die Zuordnung kann damit einfach und schnell durchgeführt werden. Gleichzeitig ist aber durch den Austausch der Kontaktadressen über die genannte Internetseite und das notwendige Senden einer elektronischen Nachricht vom User über einen Kommunikationskanal sichergestellt, dass nur ein "menschlicher" User und nicht ein automatisierter Dienst die Zuordnung durchführen möchte. Dies ist insbesondere dann sichergestellt, wenn die Adresse der genannten Internetseite nicht im Internet abgelegt ist, sondern beispielsweise nur auf dem Zielgerät selbst angeordnet oder in schriftlichen Unterlagen, beispielsweise einem Garantieschein, enthalten ist.

Unter einer Kommunikation zwischen einem User mit einem Endgerät und einem Zielgerät soll hier das Austauschen von digitalen Informationen verstanden werden. Beispielsweise kann der User einen Befehl an das Zielgerät senden, beispielsweise eine Zieltemperatur einer Klimaanlage einstellen. Es ist auch möglich, dass der User Einstellungen an einem Zielgerät vornimmt, beispielsweise dass sich eine Klimaanlage von Montag bis Freitag um 8:00 Uhr morgens einschaltet. Das Zielgerät kann auf der anderen Seite beispielsweise Messwerte, beispielsweise die aktuelle Temperatur, Statusinformationen, wie beispielsweise ob es gerade aktiv ist oder auch Quittierungen von Befehlen an das Endgerät senden. Diese ganze Kommunikation wird auch unter dem Begriff "Internet of Things" (deutsch: "Internet der Dinge") oder abgekürzt loT zusammengefasst.

Die Zielgeräte können beispielsweise als Klimaanlagen, Wetterstationen, Überwachungskameras, Autos, Heizungssteuerungen, Kühlschränke, Steuergeräte für Rollläden, Bearbeitungsmaschinen, Zugangssysteme oder so genannte Wearables ausgeführt sein. Damit können die Zielgeräte beispielsweise Bausteine von so genannten Smart Home, Connected Car oder allgemeiner Internet of Things Anwendungen sein. Grundsätzlich sind alle elektrischen, elektronischen oder photonischen Geräte als Zielgeräte denkbar, die über eine Schnittstelle für einen Informationsaustausch verfügen. Die Schnittstelle kann als eine Schnittstelle ins Internet, aber auch beispielsweise als eine Bluetooth-Schnittstelle oder eine so genannte Nahfeldkommunikationsschnittstelle (NFC-Schnittstelle) ausgeführt sein.

Ein Zielgerät wird entweder direkt oder über ein so genanntes Gateway mit dem Internet verbunden. Die Kommunikation mit dem Gateway kann beispielsweise über ein so genanntes Low Power Wide Area Network (deutsch: Niedrigenergieweitverkehrnetzwerk) erfolgen, das dafür ausgelegt ist, eine große Reichweite und einen niedrigen Energieverbrauch der Zielgeräte bei niedrigen Betriebskosten zu erreichen. Die Verbindung zum Internet kann beispielsweise auch über einen Router hergestellt werden, wobei das Zielgerät beispielsweise mittels eines so genannten "Wi-Fi Protected Setup-Verfahren" (WPS-Verfahren) mit dem Router verbunden werden kann. Damit kann man auch bei kennwortgeschützten drahtlosen lokalen Netzwerken beziehungsweise WLANs schnell und bequem per Knopfdruck eine Verbindung mit dem Router hergestellt werden. Dabei werden Verschlüsselungseinstellungen vom Router sicher zum Zielgerät übertragen und von diesem dauerhaft gespeichert. Es ist auch möglich, dass die so genannte MAC-Adresse des Zielgeräts von Hand im Router eingetragen wird und so dem Zielgerät über den Router einen Zugriff aufs Internet zu ermöglichen.

Die MAC-Adresse (Media-Access-Control-Adresse) des Zielgeräts ist eine eindeutige und einmalige Hardware-Adresse des so genannten Netzwerkadapters des Zielgeräts. Über diese MAC-Adresse ist das Zielgerät damit eindeutig identifizierbar und im Internet ansprechbar. Durch den Aufruf der genannten, dem Zielgerät zugeordneten Internetseite muss die MAC-Adresse des Zielgeräts damit nicht in irgendwelchen Eingabemasken eingegeben werden, so dass die Gefahr, dass die MAC-Adresse von Dritten unerlaubt abgefangen und missbräuchlich verwendet wird, sehr gering ist.

Jedem Zielgerät ist insbesondere eine einmalige Internetseite zugeordnet. Sobald diese Internetseite aufgerufen wird, ist damit auch festgelegt, welches Zielgerät einem User zugeordnet werden soll. Die sogenannte URL (Uniform Resource Locator, deutsch: einheitlicher Ressourcenzeiger), die die Internetseite identifiziert und lokalisiert, ist beispielsweise auf einem Aufkleber am Zielgerät oder in Unterlagen des Zielgeräts, beispielsweise einem Garantieschein abgebildet. Der User kann die Internetseite mit einem Computer oder insbesondere einem mobilen Endgerät in Form eines Smartphones, eines Tablet Computers oder einem vergleichbaren Gerät aufrufen.

Da jedem Zielgerät eine einmalige URL zugeordnet ist, ist diese sehr lange und damit umständlich zum Eingeben per Hand. Unter Verwendung von so genannten URL-Shortenern (deutsch: Kurz-URL Diensten) kann die URL entsprechend gekürzt und einfacher eingebbar gemacht werden.

Es ist außerdem möglich, dass beispielsweise vom Hersteller des Zielgeräts oder des Routers ein Programm oder eine App zur Verfügung gestellt wird, mittels welchem das Zielgerät konfiguriert und unter anderem mit dem Internet verbunden werden kann. Diese App kann als einen Konfigurationsschritt die genannte Internetseite aufrufen. Die URL kann in der App gespeichert sein, aus dem Zielgerät ausgelesen oder beispielsweise unter Verwendung einer Seriennummer des Zielgeräts beim Hersteller über das Internet angefordert werden.

Die Internetseite wird insbesondere von einer so genannten universellen Kommunikationsplattform bereitgestellt, welche auch die Kommunikation zwischen User und Zielgerät ermöglicht. Beim Aufruf der genannten Internetseite kann die universelle Kommunikationsplattform Kenngrößen, wie beispielsweise Hersteller, Marke, Modellserie, Seriennummer, Typ, Seriennummer und MAC-Adresse des Zielgeräts ermitteln. Die Kenngrößen können beispielsweise in einer Datenbank der universellen Kommunikationsplattform gespeichert sein, aus der sie ausgelesen werden. Die Kenngrößen werden aber insbesondere von einer so genannten spezifischen Kommunikationsplattform, die insbesondere vom Hersteller des Zielgeräts betrieben wird, angefordert.

Die genannten Kommunikationsplattformen sind insbesondere als Anwendungen oder Programme ausgeführt, die auf einem Server im Internet ausgeführt werden. Sie sind insbesondere auf unterschiedlichen Servern angeordnet, es können aber auch mehrere Kommunikationsplattformen auf einem Server angeordnet sein.

Die genannte Internetseite bietet die Möglichkeit, dass der User eine User-Kontaktadresse für wenigstens einen Kommunikationskanal eingeben kann. Insbesondere kann der User User-Kontaktadressen für mehrere unterschiedliche Kommunikationskanäle eingeben. Die Kommunikation zwischen User, beziehungsweise einem ihm zugeordneten Endgerät, und Zielgerät soll insbesondere über einen Kommunikationskanal erfolgen, über den der User auch mit anderen Usern kommunizieren kann, also beispielsweise über einen so genannter Kurznachrichtendienst wie beispielsweise SMS, Twitter ^{®} oder WhatsApp ^{®} oder E-Mail.

Unter einer User-Kontaktadresse soll hier ganz allgemein ein Kenner verstanden werden, mit dessen Nutzung eine elektronische Nachricht über einen Kommunikationskanal an den User adressiert und geschickt werden kann. Bei der User-Kontaktadresse kann es sich beispielsweise um eine Mobilfunknummer zur Adressierung einer SMS oder einer WhatsApp^{®} Nachricht, einer Facebook^{®} oder Twitter^{®} Kennung oder eine E-Mail-Adresse handeln. Darüber hinaus sind weitere User-Kontaktadressen denkbar. Es sollte lediglich sichergestellt sein, dass beim Versenden einer elektronischen Nachricht, der Absender der Nachricht über die angegebene User-Kontaktadresse identifiziert werden kann. Es ist auch möglich, dass der User eine digitale Visitenkarte, eine so genannte vCard über die Internetseite hochladen kann, wobei die digitale Visitenkarte eine oder mehrere User-Kontaktadressen für einen oder mehrere Kommunikationskanäle enthält.

Nach der Eingabe der User-Kontaktadresse wird über die Internetseite zumindest eine Zielgerät-Kontaktadresse des Zielgeräts für den Kommunikationskanal, für den der User eine User-Kontaktadresse angegeben hat, bereitgestellt. Wenn der User User-Kontaktadressen für mehr als einen Kommunikationskanal angegeben hat, wird auch für jeden dieser Kommunikationskanäle eine Zielgeräte-Kontaktadresse bereitgestellt. Es ist auch möglich, dass auch für Kommunikationskanäle, für die der User keine User-Kontaktadresse angegeben hat, entsprechende Zielgeräte-Kontaktadressen bereitgestellt werden. Der User kann dann zu einem späteren Zeitpunkt noch User-Kontaktadressen für weitere Kommunikationskanäle hinzufügen. Die Zielgeräte-Kontaktadressen können beispielsweise auf der Internetseite angezeigt werden.

Um die Zuordnung abzuschließen, sendet der User eine elektronische Nachricht an das Zielgerät, also an eine der Zielgeräte-Kontaktadressen. Die elektronische Nachricht des Users kann dabei auch eine Antwort auf eine automatisch generierte und vom User empfangene elektronische Nachricht sein. Das Versenden erfolgt über einen Kommunikationskanal, für den der User eine User-Kontaktadresse angegeben hat. Damit kann sichergestellt werden, dass die elektronische Nachricht vom User gesendet wurde. In der elektronischen Nachricht kann der User dem Zielgerät auch eine Bezeichnung oder einen Namen geben, unter dem er das Zielgerät ansprechen möchte. Die elektronische Nachricht muss dabei nicht unbedingt beim Zielgerät ankommen, für diesen Verfahrensschritt ist es ausreichend, dass die elektronische Nachricht an das Zielgerät adressiert wurde. Die elektronische Nachricht kann auch von der universellen Kommunikationsplattform, die auch die genannte Internetseite zur Verfügung stellt, empfangen und ausgewertet werden. Bei der elektronischen Nachricht handelt es sich insbesondere um eine Textnachricht mit einem festgelegten Inhalt, wie beispielsweise "Zuordnung Zielgerät".

Wenn die genannte elektronische Nachricht korrekt empfangen wurde, also insbesondere als Absender die vom User für diesen Kommunikationskanal angegebene User-Kontaktadresse angegeben ist und die elektronische Nachricht den festgelegten Inhalt hat, dann wird das Zielgerät dem User zugeordnet.

Die genannten Schritte werden insbesondere vom User mit einem Endgerät ausgeführt. Es ist aber auch möglich, dass einzelnen Schritte, wie beispielsweise das Ausrufen der Internetseite, von einem Dritten, beispielsweise einem Verkäufer des Zielgeräts, ausgeführt werden.

In Ausgestaltung der Erfindung wird eine Adresse der Internetseite dem User in maschinenlesbarer Form zur Verfügung gestellt. Die Adresse der Internetseite wird insbesondere optisch auswertbar und besonders vorteilhaft als so genannter QR-Code zur Verfügung gestellt. Die Adresse kann damit sehr schnell und einfach, beispielsweise mit Hilfe eines Endgeräts in Form eines Smartphones über eine Kamera des Smartphones erfasst und eingelesen werden.

Bei einem QR-Code handelt es sich um einen zweidimensionalen Code, der Informationen, insbesondere in Form von Text enthält. Ein QR-Code besteht aus einer quadratischen Matrix aus schwarzen und weißen Quadraten, die die kodierten Daten binär darstellen. Eine spezielle Markierung in drei der vier Ecken des Quadrats gibt die Orientierung des QR-Codes vor. Es sind eine Vielzahl von so genannten Apps für mobile Endgeräte verfügbar, mittels welchen QR-Codes über eine Kamera eingelesen werden können. Es ist auch denkbar, dass keine spezielle App zum Einlesen von QR-Codes verwendet werden muss, sondern die "normale" Kamera App so ausgeführt ist, dass sie QR-Codes automatisch erkennen, auslesen und umsetzen kann.

Die Adresse der Internetseite kann aber auch auf eine andere Weise, beispielsweise in Form eines Barcodes, in maschinenlesbarer Form zur Verfügung gestellt werden. Es ist auch möglich, dass am Zielgerät ein so genannter NFC-Chip (NFC = Near Field Communication, deutsch Nahfeldkommunikation) angeordnet ist, auf dem die Adresse der Internetseite gespeichert ist und mittels eines mobilen Endgeräts ausgelesen werden kann.

Die Adresse der Internetseite wird dem User insbesondere so zur Verfügung gestellt, dass beim Erfassen der die Adresse beinhaltenden Information mit einem Endgerät die Internetseite direkt aufgerufen wird. Beispielsweise ist in dem QR-Code nicht nur die Adresse der Internetseite, sondern auch gleich der Befehl enthalten, die Internetseite mit einem Internetbrowser aufzurufen. Beim Erfassen des QR-Codes mit der Kamera eines Endgeräts wird damit sofort die dem Zielgerät zugeordnete Internetseite aufgerufen. Der Aufruf der Internetseite ist für den User damit sehr einfach und ohne großen Aufwand möglich.

In Ausgestaltung der Erfindung wird die die Zielgerät-Kontaktadresse oder mehrere Zielgeräte-Kontaktadressen in Form einer digitalen Visitenkarte, also als so genannte vCard zur Verfügung gestellt. Der User kann die digitale Visitenkarte sehr einfach herunterladen und die Zielgeräte-Kontaktadressen so in ein Adressbuch übernehmen. Die Übernahme der Zielgeräte-Kontaktadressen ist für den User damit besonders einfach.

Es ist auch möglich, dass der QR-Code so ausgestaltet ist, dass er die genannte digitale Visitenkarte enthält und so die Zielgeräte-Kontaktadressen beim Einlesen des QR-Codes in das Adressbuch des mobilen Endgeräts automatisch übernommen werden.

In Ausgestaltung der Erfindung kann der User User-Kontaktadressen für mehr als einen Kommunikationskanal angeben und für die Kommunikation mit dem Zielgerät einen bevorzugten Kommunikationskanal auswählen. Damit kann sich der User die Kommunikation mit dem Zielgerät nach seinen Wünschen konfigurieren.

Der User kann beispielsweise festlegen, dass Meldungen vom Zielgerät, so genannte Alerts oder Notifications immer über einen bestimmten Kommunikationskanal, beispielsweise per SMS an das Endgerät gesandt werden.

Die Auswahl eines bevorzugten Kommunikationsverfahrens kann beispielsweise wie in der DE 102011117777 B3 beschrieben, durchgeführt werden.

In Ausgestaltung der Erfindung wird dem User ein dem Zielgerät zugeordneter Autorisierungscode zur Verfügung gestellt, der für einen korrekten Empfang in der genannten elektronischen Nachricht des Users an das Zielgerät enthalten sein muss. Damit wird besonders sicher gewährleistet, dass das Zielgerät nur einem autorisierten User zugeordnet wird. Die Zuordnung zu einem User ist aber auch ohne Verwendung eines Autorisierungscodes denkbar. Der Autorisierungscode wird insbesondere als ein so genannter Token bezeichnet und besteht beispielsweise aus einer langen Ziffern- und Buchstabenkombination. Der Token wird insbesondere von einer dem Zielgerät zugeordneten spezifischen Kommunikationsplattform, die insbesondere vom Hersteller des Zielgeräts betrieben wird, angefordert und auf der Internetseite dargestellt. Der User muss diesen Token übernehmen, beispielsweise abtippen und in die elektronische Nachricht aufnehmen. Damit kann sichergestellt werden, dass ein menschlicher User die elektronische Nachricht abgeschickt hat.

Es ist auch möglich, dass die dem Zielgerät zugeordnete spezifische Kommunikationsplattform nicht den kompletten Token zur Verfügung stellt, sondern nur einen Teil, der beispielsweise mit der MAC-Adresse des Zielgeräts kombiniert werden muss, um den kompletten Token zu erhalten.

Der genannte Token kann auch nur eine bestimmte Zeit, beispielsweise mehrere Monate oder ein Jahr gültig sein. Vor Ablauf der Gültigkeit wird automatisch ein neuer Token angefordert.

In Ausgestaltung der Erfindung kann der User elektronische Nachrichten an das Zielgerät senden, welche mit Hilfe einer Wissensdatenbank interpretiert werden. Damit muss sich der User bei der Kommunikation mit der universellen Kommunikationsplattform nicht an ein fest vorgegebenes Protokoll oder eine fest vorgegebene Syntax halten, sondern kann seine Befehle oder Vorgaben mit seinen eigenen Worten oder in freier Sprache formulieren, was die Kommunikation für den User besonders einfach und intuitiv durchführbar macht. Wenn Nachrichten nicht interpretiert werden können, werden insbesondere Rückfragen an den User geschickt.

Die elektronischen Nachrichten des Users können insbesondere auch mit mehr als einer Wissensdatenbank interpretiert werden, aus deren Rückmeldungen eine Rückmeldung ausgewählt oder Rückmeldungen unterschiedlicher Wissensdatenbanken kombiniert werden.

Unter einer Wissensdatenbank soll hier insbesondere eine semantische Datenbank verstanden werden. Derartige Wissensdatenbanken werden von Anbietern im Internet zur Verfügung gestellt, deren Dienste man beispielsweise gegen eine Nutzungsgebühr in Anspruch nehmen kann. Ein Beispiel für so eine Wissensdatenbank ist "Watson" von IBM^{®}.

Unter einer Interpretation der Eingabe soll hier verstanden werden, dass die Absicht oder die Intention des Users, die er mit seiner Eingabe hat, erkannt wird. So kann beispielsweise aus Eingaben wie "Klimaanlage Besprechungszimmer an" oder "Mach die Klimaanlage für die nächste Besprechung an" abgeleitet werden, dass die Klimaanlage im Besprechungszimmer aktiviert werden soll. Insbesondere führen auch Schreibfehler in der Eingabe nicht dazu, dass die Intention des Users nicht richtig erkannt wird.

In Ausgestaltung der Erfindung erfolgt eine Zuordnung des Zielgeräts zum User nur dann, wenn das Zielgerät keinem anderen User zugeordnet ist. Damit wird sichergestellt, dass ein Zielgerät immer nur genau einem User zugeordnet ist. Dieser User kann zwar auch anderen Usern Zugriff auf das Zielgerät geben, es besteht aber immer nur eine Zuordnung zu einem User.

Es ist insbesondere möglich, dass ein User, dem das Zielgerät zugeordnet ist, einem anderen User nur für eine bestimmte Zeitspanne Zugriff auf ein bestimmtes Zielgerät gibt. Ist der andere User beispielsweise ein Gast in einem Hotel, so kann ihm nur für die Zeitdauer seines Aufenthalts Zugriff auf ein Zielgerät im Hotelzimmer gegeben werden. Nach Ende des Aufenthalts erlischt automatisch die Zugriffsberechtigung, ohne dass weitere Schritte unternommen werden müssten.

Um die Zuordnung eines Zielgeräts ändern zu können, kann der User insbesondere die Zuordnung eines Zielgeräts zu ihm aufheben.

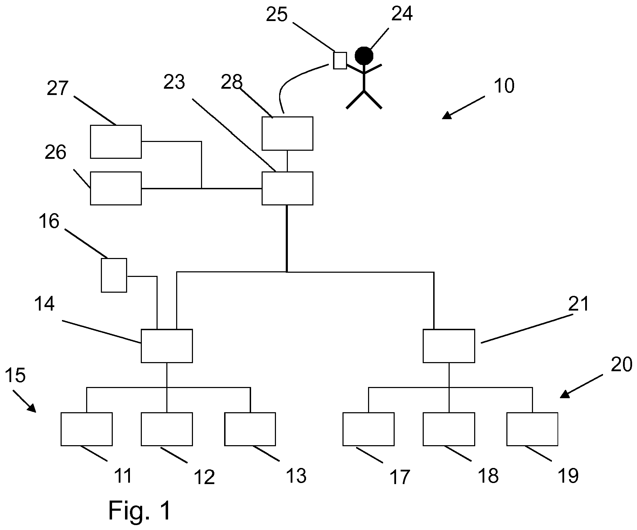

Weitere Ausgestaltungen der Erfindung gehen aus der Beschreibung und der Zeichnung hervor. Ausführungsbeispiele der Erfindung sind in der Zeichnung vereinfacht dargestellt und in der nachfolgenden Beschreibung näher erläutert. Dabei zeigt
- Fig. 1: ein Kommunikationssystem mittels welchem ein User mit Zielgeräten kommunizieren kann.

Gemäß Fig. 1 stehen bei einem Kommunikationssystem 10 Zielgeräte 11, 12, 13 über das Internet mit einer ersten spezifischen Kommunikationsplattform 14 in Kommunikationsverbindung. Die Zielgeräte 11, 12, 13 bilden damit eine erste Gruppe 15 von Zielgeräten und können so als erste Zielgeräte bezeichnet werden. Ihnen ist gemeinsam, dass sie alle vom selben ersten Hersteller stammen. Die Kommunikation zwischen der ersten spezifischen Kommunikationsplattform 14 und den Zielgeräten 11, 12, 13 erfolgt mittels eines ersten Zielgeräte-Protokolls, das vom ersten Hersteller vorgegeben wird. Der erste Hersteller stellt auch ein Programm, eine so genannte App 16 zur Verfügung, die über das Internet mit der ersten Kommunikationsplattform 14 und damit mit den Zielgeräten 11, 12, 13 der ersten Gruppe 15 von Zielgeräten kommunizieren kann. Die Kommunikation zwischen der App 16 und der ersten individuellen Kommunikationsplattform 14 erfolgt dabei über ein erstes spezifisches Endgeräte-Protokoll.

Zielgeräte 17, 18, 19 bilden eine zweite Gruppe 20 von Zielgeräten und stehen über das Internet mit einer zweiten individuellen Kommunikationsplattform 21 in Kommunikationsverbindung. Die Zielgeräte 17, 18, 19 können als zweite Zielgeräte bezeichnet werden. Die Zielgeräte 17, 18, 19 der zweiten Gruppe 20 von Zielgeräten stammen alle vom selben zweiten Hersteller, der für die Kommunikation zwischen der zweiten individuellen Kommunikationsplattform 21 und den Zielgeräten 17, 18, 19 ein zweites Zielgeräte-Protokoll vorgibt, welches sich vom ersten Zielgeräte-Protokoll unterscheidet. Der zweite Hersteller stellt keine App zur Verfügung, die über das Internet mit der zweiten Kommunikationsplattform 21 und damit mit den Zielgeräten 17, 18, 19 der zweiten Gruppe 20 von Zielgeräten kommunizieren kann. Die zweite individuelle Kommunikationsplattform 21 ist aber so ausgeführt, dass mit ihr über ein zweites spezifisches Endgeräte-Protokoll, welches sich vom ersten spezifischen Endgeräte-Protokoll unterscheidet, kommuniziert werden kann.

Die herstellerspezifische App 16 kann beispielsweise auf einem mobilen Endgerät, beispielsweise in Form eines Smartphones eines Users ausgeführt werden.

Die beiden individuellen Kommunikationsplattformen 14, 21 können an die ihnen zugeordneten Zielgeräte Befehle senden, wie beispielsweise an eine Klimaanlage den Befehl, sich einzuschalten. Sie können auch Informationen von den ihnen zugeordneten Zielgeräten empfangen, insbesondere Messwerte, wie beispielsweise eine gemessene Temperatur oder Statusmeldungen, wie den aktuellen Betriebszustand eines Zielgeräts.

Die Zielgeräte können beispielsweise als Klimaanlagen, Wetterstationen, Überwachungskameras, Autos, Heizungssteuerungen, Kühlschränke, Steuergeräte für Rollläden, Bearbeitungsmaschinen oder Zugangssysteme ausgeführt sein

Die erste individuelle Kommunikationsplattform 14 und die zweite individuelle Kommunikationsplattform 21 sind über das Internet mit einer universellen Kommunikationsplattform 23 verbunden. Um diese Kommunikation zu ermöglichen, stellen die Hersteller der jeweiligen Zielgeräte beziehungsweise die Betreiber der jeweiligen individuellen Kommunikationsplattform 14, 21 jeweils eine Programmierschnittstelle zur Verfügung, die von der universellen Kommunikationsplattform 23 genutzt wird. Die universelle Kommunikationsplattform 23 kommuniziert damit mit der ersten individuellen Kommunikationsplattform 14 mit dem ersten Endgeräte-Protokoll und mit der zweiten individuellen Kommunikationsplattform 21 mit dem zweiten Endgeräte-Protokoll. Damit kann die universelle Kommunikationsplattform 23 über die zugehörige universelle Kommunikationsplattform 14, 21 sowohl mit den Zielgeräten 11, 12, 13 der ersten Gruppe, als auch mit den Zielgeräten 17, 18, 19 der zweiten Gruppe kommunizieren.

Ein User 24 ist über ein mobiles Endgerät 25, beispielsweise ein Smartphone und das Internet über ein Kommunikationsmodul 28 mit der universellen Kommunikationsplattform 23 verbunden. Damit kann der User 24 über das Endgerät 25, das Kommunikationsmodul 28, die universelle Kommunikationsplattform 23 und die erste spezifische Kommunikationsplattform 14 mit den Zielgeräten 11, 12, 13 der ersten Gruppe 15 von Zielgeräten und über das Endgerät 25, das Kommunikationsmodul 28, die universelle Kommunikationsplattform 23 und die zweite spezifische Kommunikationsplattform 21 mit den Zielgeräten 17, 18, 19 der zweiten Gruppe 20 von Zielgeräten kommunizieren.

Die genannten Kommunikationsplattformen 14, 21, 23 sind als Anwendungen oder Programme ausgeführt, die auf einem Server im Internet ausgeführt werden. Sie sind insbesondere auf unterschiedlichen Servern angeordnet, es können aber auch mehrere Kommunikationsplattformen auf einem Server angeordnet sein.

Das Kommunikationsmodul 28 ermöglicht eine Nutzung verschiedener Kommunikationskanäle des Endgeräts 25. Unter einem Kommunikationskanal des Endgeräts wird dabei die Nutzung eines auf dem Endgerät 25 installierten Programms oder App zur Kommunikation mit anderen Personen oder Diensten verstanden. Dabei handelt es sich allgemein um Apps zum Senden und Empfangen von elektronischen Nachrichten wie beispielsweise E-Mails, SMS, WhatsApp ^{®}, Twitter ^{®} oder Apps für Sprachsteuerungen. Der User 24 kann damit auch die für die Kommunikation mit einem Zielgerät 11, 12, 13, 17, 18, 19 notwendigen Informationen, also so genannte Zielgeräte-Kontaktadressen eines Zielgeräts in einem Adressbuch ablegen, in dem er auch Kontaktadressen von Freunden, Bekannten oder Geschäftspartnern ablegt.

Der User 24 sendet seine Befehle an die universelle Kommunikationsplattform 23 damit als freien Text. Das Kommunikationsmodul 28 verfügt über verschiedene, nicht dargestellte Schnittstellenmodule, die jeweils eine Kommunikation mit dem Endgerät 25 über einen speziellen Kommunikationskanal ermöglichen. Das Kommunikationsmodul 28 setzt empfangene elektronische Nachrichten vom Endgerät 25 so um, dass sie von der universellen Kommunikationsplattform 23 empfangen werden können. Außerdem setzt es von der universellen Kommunikationsplattform 23 empfangene Informationen so um, dass sie als elektronische Nachricht über ein Schnittstellenmodul und den zugehörigen Kommunikationskanal an das Endgerät 25 und damit an den User gesandt werden können.

Das Kommunikationsmodul 28 und die universelle Kommunikationsplattform 23 sind so ausgeführt, dass der User 24 einen bevorzugten Kommunikationskanal festlegen kann. Der User 24 kann beispielsweise festlegen, dass Meldungen von Zielgeräten, so genannte Alerts immer über einen bestimmten Kommunikationskanal, beispielsweise per SMS an das Endgerät 25 gesandt werden. Die Einstellungen können entweder für alle Zielgeräte 11, 12, 13, 17, 18, 19 gelten oder auch für einzelne Gruppen von Zielgeräten oder einzelne Zielgeräte gemacht werden.

Damit der User 24 sich bei der Eingabe von Befehlen für die Zielgeräte 11, 12, 13, 17, 18, 19 nicht an fest vorgegebene Begriffe halten muss, sondern die Befehle als freien Text, beispielsweise "Klimaanlage in Raum 225 anmachen" formulieren kann. Ist die universelle Kommunikationsplattform 23 über das Internet mit einer ersten Wissensdatenbank 26 und einer zweiten Wissensdatenbank 27 verbunden. Die universelle Kommunikationsplattform 23 sendet die Eingaben des Users 24 an die Wissensdatenbanken 26, 27, welche dann die Eingabe interpretieren und damit versuchen, eine Intention des Users 24 zu erkennen und an die individuelle Kommunikationsplattform 23 zurück zu geben. Diese könnte beispielsweise in dem obigen Beispiel lauten "Klimaanlage Raum 225 aktivieren". Neben der abgeleiteten Intention liefern die Wissensdatenbanken 26, 27 zusätzlich eine so genannte Trefferwahrscheinlichkeit. Diese gibt die Wahrscheinlichkeit an, mit der die genannte Intention der tatsächlichen Intention des Users 24 entspricht. Bei abweichenden Rückmeldungen übernimmt die universelle Kommunikationsplattform 23 die Intention mit der höheren Trefferwahrscheinlichkeit. Sind die Trefferwahrscheinlichkeiten beider Wissensdatenbanken 26, 27 unterhalb eines Grenzwerts von beispielsweise 75 %, so stellt die universelle Kommunikationsplattform 23 eine Rückfrage an den User 24. Diese ist insbesondere so formuliert, dass sie fragt, ob die abgeleitete Intention mit der höheren Trefferwahrscheinlichkeit korrekt ist.

In der universellen Kommunikationsplattform 23 sind Benennungen der einzelnen Zielgeräte 11, 12, 13, 17, 18, 19 gespeichert. Beispielsweise ist gespeichert, dass die Klimaanlage in Raum 225 dem Zielgerät 11 entspricht. Damit kann ein vom User 24 eingegebener und von einer der Wissensdatenbanken 26, 27 erkannter Befehl an das richtige Zielgerät gesandt werden.

Es ist auch möglich, dass die universelle Kommunikationsplattform mit mehr als zwei, nur mit einer oder gar keiner Wissensdatenbank in Kommunikationsverbindung steht. Falls keine Wissensdatenbank verwendet wird, muss sich der User an festgelegte Befehle halten, die in der universellen Kommunikationsplattform abgelegt sind.

Damit ein User 24 über sein Endgerät 25 mit einem der Zielgeräte 11, 12, 13, 17, 18, 19 kommunizieren kann, muss das entsprechende Zielgerät dem User 24 zugeordnet sein. Um beispielsweise das Zielgerät 11 dem User 24 zuzuordnen, wird das Zielgerät 11 zuerst mit dem Internet verbunden. Auf dem Zielgerät 11 ist ein Aufkleber mit einem QR-Code angebracht. Der QR-Code enthält eine Adresse einer Internetseite, beispielsweise "www.xyz.com/1234567". Diese einmalige Internetseite ist eindeutig dem Zielgerät 11 zugeordnet. Sobald der User 24 mit dem Endgerät 25 den QR-Code einscannt, wird die Internetseite im Internetbrowser des Endgeräts 25 geöffnet.

Die genannte Internetseite wird von der universellen Kommunikationsplattform 23 bereitgestellt. Die universelle Kommunikationsplattform 23 prüft zunächst, ob das der Internetseite zugeordnete Zielgerät, also hier das Zielgerät 11 aktuell keinem User zugeordnet ist. Ist dies der Fall, so fordert die universelle Kommunikationsplattform 23 über die Internetseite zunächst den User 24 dazu auf, eine oder mehrere User-Kontaktadressen für einen oder mehrere Kommunikationskanäle einzugeben. Der User 24 kann beispielsweise seine Telefonnummer für SMS oder WhatsApp^{®}-Kommunikation oder seine E-Mail Adresse eingeben. Sobald der User 24 die User-Kontaktadressen eingeben hat, stellt die universelle Kommunikationsplattform 23 über die Internetseite Zielgerät-Kontaktadressen für die Kommunikationskanäle zur Verfügung, für die der User User-Kontaktadressen eingegeben hat. Die Zielgerät-Kontaktadressen werden dazu auf der Internetseite angezeigt. Zusätzlich wird eine digitale Visitenkarte in Form einer vCard zum Herunterladen angeboten, welche die genannten Zielgerät-Kontaktadressen enthält. Durch das Herunterladen der vCard können die Zielgerät-Kontaktadressen in das Adressbuch des Users 24 auf dem Endgerät 25 übernommen werden. Der User 24 hat außerdem die Möglichkeit, einen bevorzugten Kommunikationskanal, beispielsweise SMS auszuwählen, über den im Normalfall die Kommunikation mit dem Zielgerät 11 ablaufen soll.

In der universellen Kommunikationsplattform 23 sind Informationen zum Zielgerät 11 abgespeichert. Es sind beispielsweise der Hersteller, der Typ und eine Seriennummer abgespeichert. Die universelle Kommunikationsplattform 23 weiß damit, dass das Zielgerät 11 vom ersten Hersteller stammt, der die erste spezifische Kommunikationsplattform 14 betreibt. In dieser ersten spezifischen Kommunikationsplattform 14 ist ein dem Zielgerät 11 zugeordneter Autorisierungscode in Form eines so genannten Tokens abgelegt. Der Token besteht beispielsweise aus einem 16 - 20-stelligen Code aus Ziffern und Buchstaben. Sobald der User 24 zumindest eine User-Kontaktadresse auf der genannten Internetseite eingegeben hat, fordert die universelle Kommunikationsplattform 23 den Token des Zielgeräts 11 von der ersten spezifischen Kommunikationsplattform 14 an und zeigt den Token auf der Internetseite an.

Mit der Anzeige des Tokens auf der Internetseite fordert die universelle Kommunikationsplattform 23 den User 24 dazu auf, über einen der Kommunikationskanäle, für die er eine User-Kontaktadresse angegeben hat, eine elektronische Nachricht an das Zielgerät, also an eine der Zielgerät-Kontaktadressen zu senden. In der elektronischen Nachricht muss der Token enthalten sein. Außerdem kann der User 24 dem Zielgerät 11 auch einen Namen geben. Die elektronische Nachricht wird von der universellen Kommunikationsplattform 23 empfangen und ausgewertet. Wenn die elektronische Nachricht als Absender die entsprechende User-Kontaktadresse aufweist und den korrekten Token enthält, dann wird ein korrekter Empfang der elektronischen Nachricht festgestellt und die universelle Kommunikationsplattform 23 ordnet das Zielgerät 11 dem User 24 zu. Der User 24 kann ab diesem Zeitpunkt mit dem Zielgerät 11 kommunizieren.

Damit der User 24 sich in der genannten elektronischen Nachricht nicht zwingend an festgelegt Befehle halten muss, wird die elektronische Nachricht von den Wissensdatenbanken 26, 27 interpretiert. Damit kann der User 24 beispielsweise mit der elektronischen Nachricht in Form einer SMS mit dem Inhalt "1234-5678-abcd-efgh Name ist Klimaanlage Raum 225" die Zuordnung des Zielgeräts 11 anfordern und ihm gleichzeitig den Namen "Klimaanlage Raum 225" geben.

Wenn der User 24 einem anderen, in Fig. 1 nicht dargestellten User X den Zugriff auf das Zielgerät 11 erlauben möchte, so kann er dies durch das Senden einer elektronischen Nachricht machen. Der User 24 kann dazu beispielsweise eine elektronische Nachricht in Form einer SMS mit dem Inhalt "Freigabe Klimaanlage Raum 225 für User X" an das Zielgerät 11 senden. Wenn der Zugriff nur zeitlich begrenzt erfolgen soll, dann kann diese Begrenzung in die elektronische Nachricht aufgenommen werden. Sie kann dann beispielsweise lauten: "Freigabe Klimaanlage Raum 225 für User X bis morgen 19:00 Uhr".

Wenn der User 24 nicht mehr mit dem Zielgerät 11 kommunizieren und es für einen anderen User freigeben will, so kann er einen entsprechenden Befehl an eine Zielgerät-Kontaktadresse des Zielgeräts 11 senden. Die Nachricht kann beispielsweise lauten "Freigeben Klimaanlage Raum 225". Die universelle Kommunikationsplattform 23 kann in diesem Fall eine Bestätigung des Befehls vom User 24 verlangen. Erfolgt die Bestätigung durch eine entsprechende elektronische Nachricht vom User 24, so wird die Zuordnung des Zielgeräts 11 zum User 24 aufgehoben, das Zielgerät 11 damit freigegeben. Es kann anschließend mit dem beschriebenen Verfahren einem anderen User (oder auch wieder dem User 11) zugeordnet werden. Wenn der User 24 anderen Usern den Zugriff auf das Zielgerät wie oben beschrieben erlaubt hatte, so erlöschen diese Zugriffsberechtigungen insbesondere mit der Aufhebung der Zuordnung zum User 24.

## Patentansprüche

1. Verfahren zur Zuordnung eines Zielgeräts zu einem User mit folgenden Schritten
- Verbinden des Zielgeräts (11, 12, 13, 17, 18, 19) mit dem Internet,
- Aufruf einer dem Zielgerät (11, 12, 13, 17, 18, 19) zugeordneten Internetseite,
- Eingabe einer User-Kontaktadresse des Users (24) für einen Kommunikationskanal,
- Bereitstellen einer Zielgerät-Kontaktadresse des Zielgeräts (11, 12, 13, 17, 18, 19) für den genannten Kommunikationskanal,
- Senden einer elektronischen Nachricht vom User (24) an die Zielgerät-Kontaktadresse des Zielgeräts (11, 12, 13, 17, 18, 19) über den genannten Kommunikationskanal, wobei der Absender der Nachricht über die angegebene User-Kontaktadresse identifiziert werden kann, und
- Zuordnen des Zielgeräts (11, 12, 13, 17, 18, 19) zum User (24), wenn die genannte elektronische Nachricht korrekt empfangen wird.

2. Verfahren nach Anspruch 1,
**dadurch gekennzeichnet, dass**
eine Adresse der Internetseite dem User (24) in maschinenlesbarer Form zur Verfügung gestellt wird.

3. Verfahren nach Anspruch 2,
**dadurch gekennzeichnet, dass**
die Adresse der Internetseite dem User (24) so zur Verfügung gestellt wird, dass beim Erfassen der die Adresse beinhaltenden Information mit einem Endgerät (25) die Internetseite direkt aufgerufen wird.

4. Verfahren nach Anspruch 1, 2 oder 3,
**dadurch gekennzeichnet, dass**
die Zielgerät-Kontaktadresse in Form einer digitalen Visitenkarte zur Verfügung gestellt wird.

5. Verfahren nach einem der Ansprüche 1 bis 4,
**dadurch gekennzeichnet, dass**
der User (24) User-Kontaktadressen für mehr als einen Kommunikationskanal angeben und für die Kommunikation mit dem Zielgerät (11, 12, 13, 17, 18, 19) einen bevorzugten Kommunikationskanal auswählen kann.

6. Verfahren nach einem der Ansprüche 1 bis 5,
**dadurch gekennzeichnet, dass**
dem User (24) ein dem Zielgerät (11, 12, 13, 17, 18, 19) zugeordneter Autorisierungscode zur Verfügung gestellt wird, der für einen korrekten Empfang in der genannten elektronischen Nachricht des Users (24) an das Zielgerät (11, 12, 13, 17, 18, 19) enthalten sein muss.

7. Verfahren nach Anspruch 6,
**dadurch gekennzeichnet, dass**
der Autorisierungscode von einer dem Zielgerät (11, 12, 13, 17, 18, 19) zugeordneten spezifischen Kommunikationsplattform (14, 21) zur Verfügung gestellt wird.

8. Verfahren nach einem der Ansprüche 1 bis 7,
**dadurch gekennzeichnet, dass**
der User (24) elektronische Nachrichten an das Zielgerät (11, 12, 13, 17, 18, 19) senden kann, welche mit Hilfe einer Wissensdatenbank (26, 27) interpretiert werden.

9. Verfahren nach einem der Ansprüche 1 bis 8,
**dadurch gekennzeichnet, dass**
eine Zuordnung des Zielgeräts (11, 12, 13, 17, 18, 19) zum User (24) nur erfolgt, wenn das Zielgerät (11, 12, 13, 17, 18, 19) keinem anderen User zugeordnet ist.

10. Verfahren nach Anspruch 9,
**dadurch gekennzeichnet, dass**
der User (24) die Zuordnung eines Zielgeräts (11, 12, 13, 17, 18, 19) zu ihm aufheben kann.

## Claims

1. Process for allocating a target device to a user with the following steps:
- Connecting the target device(s) (11, 12, 13, 17, 18, 19) with the Internet,
- calling a Website allocated to one of the target devices (11, 12, 13, 17, 18, 19),
- putting in a user's (24) contact address for a communication channel,
- providing a target device contact address of the target device(s) (11, 12, 13, 17, 18, 19) for this communication channel,
- transmitting an electronic message from the user (24) to the target device contact address of the target device (11, 12, 13, 17, 18, 19) via the above communication channel, so that the sender of the message can be identified via the user contact address stated, and
- allocating the target device (11, 12, 13, 17, 18, 19) to the user (24), when the above electronic message has been correctly received.

2. Process according to claim 1,
this being **characterized in that**
a Website address is made available to the user (24) in machine readable form.

3. Process according to claim 2,
this being **characterized in that**
the Website address is made available to the user (24) in such a way that the Website is directly called, when the information contained in the address is captured with a terminal device (25).

4. Process according to claim 1, 2 or 3,
this being **characterized in that**
the target device contact address will be provided in form of a digital visiting card.

5. Process according to one of the claims 1 - 4,
this being **characterized in that**
the user (24) can state the user contact addresses for more than one communication channel and select one preferred communication channel for the communication with the target device (11, 12, 13, 17, 18, 19).

6. Process according to one of the claims 1 - 5,
this being **characterized in that**
the user (24) will be provided with an authorization code which is allocated to the target device (11, 12, 13, 17, 18, 19) and which must be contained in the user's electronic message to the target device (11, 12, 13, 17, 18, 19), so as to ensure the correct reception of the message.

7. Process according to claim 6,
this being **characterized in that**
this authorization code will be provided by a specific communication platform (14, 21) which is allocated to the target device (11, 12, 13, 17, 18, 19).

8. Process according to one of the claims 1 - 7,
this being **characterized in that**
the user (24) can transmit electronic messages to the target device (11, 12, 13, 17, 18, 19), with the messages being interpreted with the help of a knowledge database (26, 27).

9. Process according to one of the claims 1 - 8,
this being **characterized in that**
a target device (11, 12, 13, 17, 18, 19) can only be allocated to the user (24), if this target device (11, 12, 13, 17, 18, 19) has not been allocated to any other user.

10. Process according to claim 9,
this being **characterized in that**
the user (24) can remove a target device's (11, 12, 13, 17, 18, 19) allocation to him/her.

## Revendications

1. Procédé d'attribution d'un appareil cible à un utilisateur avec les étapes suivantes
- raccordement de l'appareil cible (11, 12, 13, 17, 18, 19) à Internet,
- consultation d'un site Internet attribué à l'appareil cible (11, 12, 13, 17, 18, 19),
- saisie d'une adresse de contact d'utilisateur de l'utilisateur (24) pour un canal de communication,
- fourniture d'une adresse de contact d'appareil cible (11, 12, 13, 17, 18, 19) pour le canal de communication mentionné,
- envoi d'un message électronique de l'utilisateur (24) à l'adresse de contact d'appareil cible de l'appareil cible (11, 12, 13, 17, 18, 19) par le canal de communication mentionné, l'expéditeur du message pouvant être identifié par l'adresse de contact d'utilisateur, et
- l'attribution de l'appareil cible (11, 12, 13, 17, 18, 19) à l'utilisateur (24), lorsque le message électronique mentionné est correctement reçu.

2. Procédé selon la revendication 1
**caractérisé par le fait que**
une adresse du site Internet est mise à la disposition de l'utilisateur (24) sous une forme lisible par machine.

3. Procédé selon la revendication 2
**caractérisé par le fait que**
l'adresse du site Internet est mise à la disposition de l'utilisateur (24) de telle sorte que lorsque l'information contenant l'adresse est enregistrée avec un terminal (25), le site Internet est appelé directement.

4. Procédé selon les revendications 1, 2 ou 3,
**caractérisé par le fait que**
l'adresse de contact de l'appareil cible est mise à disposition sous la forme d'une carte de visite numérique.

5. Procédé selon l'une des revendications 1 à 4,
**caractérisé par le fait que**
l'utilisateur (24) peut indiquer des adresses de contact d'utilisateur pour plus d'un canal de communication et sélectionner un canal de communication préféré pour la communication avec l'appareil cible (11, 12, 13, 17, 18, 19).

6. Procédé selon l'une des revendications 1 à 5,
**caractérisé par le fait que**
l'utilisateur (24) reçoit un code d'autorisation attribué à l'appareil cible (11, 12, 13, 17, 18, 19), qui doit être contenu dans le message électronique mentionné de l'utilisateur (24) à l'appareil cible (11, 12, 13, 17, 18, 19) pour une réception correcte.

7. Procédé selon la revendication 6,
**caractérisé par le fait que**
le code d'autorisation est fourni par une plateforme de communication spécifique (14, 21) attribuée à l'appareil cible (11, 12, 13, 17, 18, 19).

8. Procédé selon l'une des revendications 1 à 7,
**caractérisé par le fait que**
l'utilisateur (24) peut envoyer des messages électroniques à l'appareil cible (11, 12, 13, 17, 18, 19), qui sont interprétés à l'aide d'une base de connaissances (26, 27).

9. Procédé selon l'une des revendications 1 à 8,
**caractérisé par le fait que**
une attribution de l'appareil cible (11, 12, 13, 17, 18, 19) à l'utilisateur (24) ne s'effectue que lorsque l'appareil cible (11, 12, 13, 17, 18, 19) n'est attribué à aucun autre utilisateur.

10. Procédé selon la revendication 9,
**caractérisé par le fait que**
l'utilisateur (24) peut annuler l'attribution d'un appareil cible (11, 12, 13, 17, 18, 19) le concernant.
